# EUROPÄISCHE PATENTANMELDUNG

(11) **EP 4 837 737 A1**
(43) Veröffentlichungstag der Anmeldung: **11.11.2026**
(21) Anmeldenummer: 25174990.9
(22) Anmeldetag: 08.05.2025
(51) Int. Cl.: B32B 21/13, B32B 3/08, B32B 3/14, B32B 3/18, B32B 3/26, B32B 7/03, B32B 7/12, B32B 21/04

(54) **MEHRSCHICHTIGES HOLZBAUELEMENT UND HOLZBAUTEIL FÜR EINEN BODEN ODER EINE DECKE**

(71) Anmelder: Lehmann Holzwerk AG, 9200 Gossau (CH)
(72) Erfinder: Riggenbach, David, 4316 Hellikon (CH)
(74) Vertreter: Hepp Wenger Ryffel AG

(57) **Zusammenfassung**

Die Erfindung betrifft ein mehrschichtiges Holzbauelement (1). Das mehrschichtige Holzbauelement (1) umfasst einen ersten Aussenschichtbereich (2), der eine erste äussere Schicht (3) und eine zweite äussere Schicht (4) umfasst, wobei die erste äussere Schicht (3) und die zweite äussere Schicht (4) über eine Fläche des mehrschichtigen Holzbauelements (1) jeweils durchgehend ausgebildet sind und jeweils miteinander verklebt sind. Ein Innenschichtbereich (5) umfasst zumindest zwei Innenschichten (6), wobei der Innenschichtbereich (5) an den ersten Aussenschichtbereich (2) angrenzt, und die zumindest zwei Innenschichten (6) Längshölzer (13) und Querhölzer (14) umfassen und zumindest einen Hohlraum (9) bilden. Die Erfindung betrifft ausserdem ein Holzbauteil für einen Boden oder eine Decke. Das Holzbauteil umfasst mindestens ein mehrschichtiges Holzbauelement (1).

## Beschreibung

Die vorliegende Erfindung betrifft ein mehrschichtiges Holzbauelement sowie ein Holzbauteil für einen Boden oder eine Decke gemäss den unabhängigen Ansprüchen.

Mehrschichtige Holzbauelemente sind aus dem Stand der Technik bekannt. Mehrschichtige Massivholzplatten sind beispielsweise aus EP 3 921 149 A2 oder CA 2 872 041 A1 bekannt. Solche mehrschichtige Massivholzplatten werden für Wände und Böden in Gebäuden verwendet. Diese mehrschichtigen Massivholzplatten verfügen über eine biaxiale Lastabtragung. Der Nachteil dieser mehrschichtigen Massivholzplatten ist, dass die Platten durch das Massivholz viel Material benötigen. Durch den stetigen Rückgang der Holzbestände und die steigende Nachfrage an Massivholz für Holzbauelemente ist ein materialeffizienter Einsatz jedoch unabdingbar.

US2020016873A1 offenbart eine mehrschichtige Massivholzplatte, bei welcher selektiv, Teile der inneren Schichten entfernt wurden. Dadurch wird für die mehrschichtige Massivholzplatte weniger Material benötigt als bei einer herkömmlichen mehrschichtigen Massivholzplatte. Solch eine mehrschichtige Massivholzplatte verfügt jedoch nicht über eine biaxiale Lastabtragung.

Es ist daher die Aufgabe der Erfindung die Nachteile im Stand der Technik zu überwinden und eine materialoptimierte, mehrschichtige Massivholzplatte zu schaffen, welche über eine biaxiale Lastabtragung verfügt.

Insbesondere wird die Aufgabe durch ein mehrschichtiges Holzbauelement gelöst. Das mehrschichtige Holzbauelement umfasst einen ersten Aussenschichtbereich, der eine erste äussere Schicht und eine zweite äussere Schicht umfasst. Die erste äussere Schicht und die zweite äussere Schicht sind über eine Fläche des mehrschichtigen Holzbauelements jeweils durchgehend ausgebildet und sind jeweils miteinander verklebt. Das mehrschichtige Holzbauelement umfasst eine Längenausdehnung *l* und eine Querausdehnung *b*. Das mehrschichtige Holzbauelement umfasst ein Innenschichtbereich mit zumindest zwei Innenschichten. Der Innenschichtbereich grenzt an den ersten Aussenschichtbereich. Die zumindest zwei Innenschichten umfassen Längshölzer und Querhölzer, wobei in den zumindest zwei Innenschichten zumindest ein Hohlraum ausgebildet ist.

Ein derartiges mehrschichtiges Holzbauelement kann beispielsweise für tragende Boden-, Wand-, Decken- oder Dachelemente in Modulbauten und/oder Holz-Elementbauten verwendet werden.

Die erste und zweite äussere Schicht welche durchgehend ausgebildet sind, verleihen dem mehrschichtigen Holzbauelement eine hohe Tragfähigkeit und bilden eine geschlossene Ebene, welche als Grundlage für unterschiedliche Unter- und Oberbauten verwendet werden kann.

Die Anzahl an äusseren Schichten ist nicht auf zwei Schichten limitiert. Die Anzahl an äusseren Schichten hängt unteranderem von den äusseren Abmessungen, dem Verwendungszweck und den statischen und dynamischen Belastungen ab. Die Anzahl äusserer Schichten kann auch drei oder mehr Schichten umfassen. In einer Ausführungsform kann auch nur eine einzelne äussere Schicht vorhanden sein.

Das mehrschichtige Holzbauelement umfasst eine Längenausdehnung *l* und eine Querausdehnung *b*, wobei die Dimensionen ebenfalls vom Verwendungszweck abhängen. Die Längenausdehnung *l* kann bis zu 14 m betragen und die Querausdehnung *b* kann bis zu 3.5 m betragen. Die Längenausdehnung *l* und Querausdehnung *b* können bei geeigneten Bearbeitungsmaschinen und Rohmaterialien auch grösser sein.

Der erste Aussenschichtbereich und der Innenschichtbereich umfassen Holz. Der erste Aussenschichtbereich und der Innenschichtbereich können das gleiche Holz umfassen oder unterschiedliche Hölzer umfassen. Als Hölzer eignen sich beispielsweise Tanne oder Fichte, da diese in Europa weit verbreitet sind und relativ schnell nachwachsen. Diese Hölzer können zudem gut verarbeitet werden und bieten eine gute Stabilität und Tragfähigkeit.

Die erste äussere Schicht und die zweite äussere Schicht können jeweils mehrere Holzlamellen umfassen. Die Holzlamellen können schmalseitig verklebt sein. Die erste und die zweite äussere Schicht können vollflächig verklebt sein. Sowohl für die schmalseitige als auch für die vollflächige Verklebung kann ein Einkomponenten- oder Zweikomponentenklebstoff verwendet werden. Einkomponentenklebstoff eignen sich hierfür besonders, da sie einfach in der Handhabung sind und schnell verarbeitbar sind. Insbesondere eignen sich Polyurethankleber da sie wasser- und witterungsbeständig sind, eine hohe Festigkeit aufweisen und lösungsmittelfrei sein können.

Der Innenschichtbereich umfasst mindestens zwei Innenschichten. Die Anzahl an Innenschichten ist nicht auf zwei Schichten limitiert. Die Anzahl an Innenschichten hängt unter anderem von den äusseren Abmessungen, dem Verwendungszweck, den statischen und dynamischen Belastungen, dem Schwingungsverhalten, der zulässigen Verformung, dem Feuerwiderstand und der Abmessung und Qualität des Rohmaterials ab. In einer Ausführungsform kann der Innenschichtbereich auch nur eine Innenschicht umfassen. Längshölzer bezeichnet Holzlamellen, welche ihre grösste Ausdehnung in Längsausdehnung *l* des mehrschichtigen Holzbauelements aufweisen. Querhölzer bezeichnet Holzlamellen, welche ihre grösste Ausdehnung in Querausdehnung *b* des mehrschichtigen Holzbauelements aufweisen.

Eine einzelne Innenschicht kann Längshölzer umfassen, welche sich durchgehend und einstückig über die Längsausdehnung *l* des mehrschichtigen Holzbauelements erstrecken. Eine derartige Innenschicht umfasst zudem Querhölzer, welche sich nicht durchgehend über die Querausdehnung *b* des mehrschichtigen Holzbauelements erstrecken und zwischen den Längshölzer angeordnet sein können.

Eine einzelne Innenschicht kann Querhölzer umfassen, welche sich durchgehend und einstückig über die Querausdehnung *b* des mehrschichtigen Holzbauelements erstrecken. Eine derartige Innenschicht umfasst zudem Längshölzer, welche sich nicht durchgehend über die Längsausdehnung *l* des mehrschichtigen Holzbauelements erstrecken und zwischen den Querhölzern angeordnet sein können. Längshölzer und Querhölzer können auf dieselbe Art wie konventionelle Hölzer für mehrschichtige Massivholzplatten hergestellt werden.

Durch den zumindest einen Hohlraum kann bei gleicher Belastbarkeit bis zu 50% an Material gegenüber konventionellen mehrschichtigen Massivholzplatten eingespart werden. Durch die Längshölzer und Querhölzer verfügt das mehrschichtige Holzbauelement dennoch über eine biaxiale Lastabtragung.

Das mehrschichtige Holzbauelement kann punkt- oder liniengelagert sein. Das mehrschichtige Holzbauelement kann als Einfeldträger, oder Druchlaufträger ausgebildet sein und kann einen Kragarm umfassen. Die Ausbildungsform hängt ebenfalls von der Verwendung, den äusseren Abmassen und der statischen und dynamischen Belastung ab. Ein Einfeldträger ist dabei für statische Berechnungen einfach und leichter zu montieren. Druchlaufträger sind hingegen bei längeren Spannweiten effizienter durch die bessere Lastenverteilung.

Der erste Aussenschichtbereich kann in einer horizontalen Einbaulage, wie beispielsweise als Decken- oder Bodenelement, nach oben oder nach unten gerichtet sein.

Der erste Aussenschichtbereich kann auf der gegenüberliegenden Seite des Innenschichtbereichs weitere Schichten umfassen, welche gewisse Eigenschaften, wie beispielsweise Schall- und/oder Wärmeisolation, des mehrschichtigen Holzbauelements verbessern. Ebenso kann der Innenschichtbereich auf der gegenüberliegenden Seite des erste Aussenschichtbereichs weitere vollflächige Schichten umfassen, welche gewisse Eigenschaftes, wie beispielsweise Schall- und/oder Wärmeisolation, des mehrschichtigen Holzbauelements verbessern.

Falls das mehrschichtige Holzbauelement als Bodenelement ausgebildet ist, können auf der oberen Seite Bodenbeläge, mit oder ohne Zwischenschichten aus Gipsfasern, angeordnet sein. Solche Bodenbeläge können beispielsweise Linoleum umfassen. Linoleumbeläge sind umweltfreundlich, robust und pflegeleicht.

Zwischen der oberen Seite und einem Bodenbelag kann auch eine Trittschalldämmung und Nassestrich angeordnet sein oder eine Schüttung und Trockenestrich. Ein derartiges mehrschichtiges Holzbauelement verbessert die akustischen Eigenschaften.

Auf der unteren Seite des Bodenelements können Dämmschichten insbesondere verrottungssichere Dämmschichten angeordnet sein. In einer Ausführungsform können auch zementgebundene Spanplatten angeordnet sein.

Falls das mehrschichtige Holzbauelement als Bodenelement derart ausgerichtet ist, dass der erste Aussenschichtbereich nach unten ausgerichtet ist, kann der Innenschichtbereich auf der gegenüberliegenden Seite des erste Aussenschichtbereichs eine vollflächige Grobspanplatte umfassen.

Falls das mehrschichtige Holzbauelement als Deckenelement ausgebildet ist, kann auf der Ober- oder Unterseite eine Dämmschicht angeordnet sein. Auf der Unterseite kann auch eine Deckenverkleidung angeordnet sein. In einer Ausführungsform kann oberhalb des mehrschichtigen Holzbauelements eine Hinterlüftung angeordnet sein. Eine derartige Ausführungsform verbesserten den Abtransport von Feuchtigkeit.

Das mehrschichtige Holzbauelement kann einen zweiten Aussenschichtbereich umfassen, der dem ersten Aussenschichtbereich gegenüberliegt, so dass der Innenschichtbereich zwischen dem ersten Aussenschichtbereich und dem zweiten Aussenschichtbereich angeordnet ist. Der zweiten Aussenschichtbereich kann eine erste äussere Schicht und eine zweite äussere Schicht umfassen. Die erste äussere Schicht des zweiten Aussenschichtbereichs und die zweite äussere Schicht des zweiten Aussenschichtbereichs können über eine Fläche des mehrschichtigen Holzbauelements jeweils durchgehend ausgebildet sein und jeweils miteinander verklebt sein.

Der zweite Aussenschichtbereich kann ebenfalls Holz umfassen. Für den zweite Aussenschichtbereich eignen sich die gleichen Hölzer wie für den erste Aussenschichtbereich und der Innenschichtbereich. Dabei kann der zweite Aussenschichtbereich das gleiche Holz wie der erste Aussenschichtbereich und/oder der Innenschichtbereich umfassen oder unterschiedliche Hölzer umfassen.

Die Anzahl an äusseren Schichten des zweite Aussenschichtbereichs ist ebenfalls nicht auf zwei Schichten limitiert. Die Anzahl an äusseren Schichten hängt unter anderem von den äusseren Abmessungen, dem Verwendungszweck und den statischen und dynamischen Belastungen ab. Die Anzahl äusserer Schichten kann auch drei oder mehr Schichten umfassen. In einer Ausführungsform kann auch nur eine einzelne äussere Schicht vorhanden sein. Die Anzahl an äusseren Schichten des zweite Aussenschichtbereichs kann gleich oder verschieden zur Anzahl an äusseren Schichten des ersten Aussenschichtbereichs sein.

Auch die erste äussere Schicht und die zweite äussere Schicht des zweiten Aussenschichtbereichs können jeweils mehrere Holzlamellen umfassen. Die Holzlamellen können schmalseitig verklebt sein. Die erste und die zweite äussere Schicht können vollflächig verklebt sein. Als Kleber eignen sich die gleichen Kleber wie für das Verkleben der ersten äusseren Schicht, wobei nicht zwingen derselbe Kleber verwendet werden muss.

Durch einen zweiten Aussenschichtbereich kann das mehrschichtige Holzbauelement als Hohlkasten ausgebildet sein. Durch die sich gegenüberliegenden Aussenschichtbereiche wird beispielsweise die Stabilität des mehrschichtigen Holzbauelements verbessert. Neben verbesserten bauphysikalischen Eigenschaften können durch einen zweiten Aussenschichtbereich auch verbesserte Brandschutz-und/oder Wärmedämmeigenschaften erreicht werden. Ein mehrschichtiges Holzbauelement ohne zweiten Aussenschichtbereich bietet hingegen mehr Flexibilität beim Einbringen von zusätzlichen Installationen wie beispielsweise Elektro- und/oder Sanitärinstallationen.

Die erste äussere Schicht des ersten Aussenschichtbereichs kann Längshölzer umfassen und die zweite äussere Schicht des ersten Aussenschichtbereichs kann Querhölzer umfassen. Die erste äussere Schicht des ersten Aussenschichtbereichs kann Querhölzer umfassen und die zweite äussere Schicht des ersten Aussenschichtbereichs kann Längshölzer umfassen.

Eine derartige Anordnung der ersten und der zweiten äusseren Schicht des ersten Aussenschichtbereichs verbessert die biaxiale Lastabtragung. Vorzugsweise umfasst eine äussere Schicht mit Längshölzern ausschliesslich Längshölzer und eine äussere Schicht mit Querhölzern umfasst vorzugsweise ausschliesslich Querhölzer. Eine derartige Anordnung verbessert weiter die biaxiale Lastabtragung.

Die Querhölzer erstrecken sich vorzugsweise durchgehend über die Querausdehnung *b* des mehrschichtigen Holzbauelements und sind vorzugsweise einstückig ausgebildet. Die Querhölzer können jeweils gleich oder unterschiedlich breit ausgebildet sein. Die Längshölzer erstrecken sich vorzugsweise durchgehend über die Längsausdehnung *l* des mehrschichtigen Holzbauelements und sind vorzugsweise einstückig ausgebildet. Die Längshölzer können jeweils gleich oder unterschiedlich breit ausgebildet sein.

Die erste äussere Schicht des zweiten Aussenschichtbereich kann Längshölzer umfassen und die zweite äussere Schicht des zweiten Aussenschichtbereich kann Querhölzer umfassen. Die erste äussere Schicht des zweiten Aussenschichtbereich kann Querhölzer umfassen und die zweite äussere Schicht des zweiten Aussenschichtbereich kann Längshölzer umfassen.

Eine derartige Anordnung der ersten und der zweiten äusseren Schicht des zweiten Aussenschichtbereichs verbessert die biaxiale Lastabtragung. Vorzugsweise umfasst eine äussere Schicht des zweiten Aussenschichtbereichs mit Längshölzern ausschliesslich Längshölzer und eine äussere Schicht mit Querhölzern umfasst vorzugsweise ausschliesslich Querhölzer. Eine derartige Anordnung verbessert weiter die biaxiale Lastabtragung.

Die Querhölzer erstrecken sich vorzugsweise durchgehend über die Querausdehnung *b* des mehrschichtigen Holzbauelements und sind vorzugsweise einstückig ausgebildet. Die Querhölzer können jeweils gleich oder unterschiedlich breit ausgebildet sein. Die Längshölzer erstrecken sich vorzugsweise durchgehend über die Längsausdehnung *l* des mehrschichtigen Holzbauelements und sind vorzugsweise einstückig ausgebildet. Die Längshölzer können jeweils gleich oder unterschiedlich breit ausgebildet sein.

Die erste äussere Schicht des ersten Aussenschichtbereichs und/oder die zweite äussere Schicht des ersten Aussenschichtbereichs und/oder die erste äussere Schicht des zweiten Aussenschichtbereichs und/oder die zweite äussere Schicht des zweiten Aussenschichtbereichs können eine Einzelschichthöhe h von 20 mm bis 40 mm umfassen.

Eine derartige Einzelschichthöhe erlaubt ein vollflächiges Abdecken des mehrschichtigen Holzbauelements bei gleichzeitiger Ressourcenschonung. Die äusseren Schichten kann auch eine Einzelschichthöhe von 6 mm bis 60 mm umfassen.

Die erste äussere Schicht und die zweite äussere Schicht des ersten Aussenschichtbereichs und/oder die erste äussere Schicht und die zweite äussere Schicht des ersten Aussenschichtbereichs können eine Aussparung umfassen.

Derartige Aussparungen können beispielsweise für eine Durchführung von Elektro- und/oder Sanitärinstallationen verwendet werden. Ein mehrschichtiges Holzbauelement kann eine oder mehrere Aussparungen umfassen.

Eine Innenschicht, vorzugsweise sämtliche Innenschichten, können eine Einzelschichthöhe *h* von 20 mm bis 60 mm umfassen.

Bevorzugt umfasst eine Innenschicht eine Einzelschichthöhe h von 40 mm, da solch eine Einzelschichthöhe besonders günstig herstellbar ist. In einer Ausführungsform können die Innenschichten ein Einzelschichthöhe *h* von 6 mm bis 120 mm umfassen. Eine derartige Einzelschichthöhe kann es erlauben, vorgegebene Gesamthöhen effizient zu erreichen.

Das mehrschichtiges Holzbauelement kann eine ungerade Anzahl an Innenschichten umfassen.

Eine ungerade Anzahl Innenschichten, insbesondere 3, 5 oder 7 Innenschichten, können besonders vorteilig für eine biaxiale Lastabtragung sein.

Eine Innenschicht kann eine Querinnenschicht sein, welche Querhölzer umfasst, welche sich über die Querausdehnung *b* des mehrschichtigen Holzbauelements durchgehend, vorzugsweise einstückig erstrecken.

Eine derartige Innenschicht verbessert die Belastbarkeit entlang der Querausdehnung *b* des mehrschichtigen Holzbauelements. Eine derartige Innenschicht kann zwischen zwei Querhölzern zudem ein oder mehrere Längshölzer umfassen, welche sich nicht durchgehend über die Längsausdehnung *l* des mehrschichtigen Holzbauelements erstrecken. In einer Ausführungsform liegen in definierten Bereichen mehrere Querhölzer schmalseitig nebeneinander. Derartige Bereiche können beispielsweise Auflagerbereiche sein oder andere Bereiche, in welchen höhere Kräfte auftreten.

Die Querhölzer können unterschiedliche Breiten aufweisen. In einer Ausführungsform sind die Querhölzer in den Auflagerbereichen breiter ausgebildet als Querhölzer welche nicht im Stützbereich liegen.

Eine Innenschicht kann eine Längsinnenschicht sein, welche Längshölzer umfasst, welche sich über die Längsausdehnung *l* des mehrschichtigen Holzbauelements durchgehend, vorzugsweise einstückig erstrecken.

Eine derartige Innenschicht verbessert die Belastbarkeit entlang der Längsausdehnung *l* des mehrschichtigen Holzbauelements. Eine derartige Innenschicht kann zwischen zwei Längshölzern zudem ein oder mehrere Querhölzer umfassen, welche sich nicht durchgehend über die Querausdehnung *b* des mehrschichtigen Holzbauelements erstrecken. Die Längshölzer können unterschiedliche Breiten aufweisen.

Das mehrschichtige Holzbauelement kann mehrere Innenschichten umfassen, wobei Querinnenschichten und Längsinnenschichten alternierend, übereinander angeordnet sind. Eine derartige Anordnung der Innenschichten verbessert die biaxiale Lastabtragung. Die Innenschichten können auch derart angeordnet sein, dass zwei Querinnenschichten und/oder zwei Längsinnenschichten übereinander angeordnet sind. Eine derartige Ausführungsform kann beispielsweise die Belastbarkeit entlang der Längsausdehnung *l* und/oder Querausdehnung *b* des mehrschichtigen Holzbauelements verbessern.

In einer Ausführungsform kann auch eine Innenschicht derart ausgebildet sein, dass diese nicht als Querinnenschicht oder als Längsinnenschicht ausgebildet ist. Eine derartige Innenschicht kann beispielsweise Querhölzer umfassen welche sich nicht durchgehend über die Querausdehnung *b* des mehrschichtigen Holzbauelements erstrecken und Längshölzer umfassen welche sich nicht durchgehend über Längsausdehnung *l* des mehrschichtigen Holzbauelements erstrecken. Eine derartige Innenschicht kann beispielsweise auch Hölzer umfassen, welche nicht orthogonal zur Längs-oder Querausdehnung des mehrschichtigen Holzbauelements ausgerichtet sind. Solch eine Innenschicht kann die alternierende Anordnung von Querinnenschichten und Längsinnenschichten unterbrechen

Jede Innenschicht kann zumindest zwei äussere Längshölzer und zwei äussere Querhölzer umfassen, welche einen Rahmen bilden.

Ein derartiger Rahmen schliesst das mehrschichtige Holzbauelement seitlich ab, wodurch die Handhabbarkeit verbessert wird.

Ein Rahmen kann auch mehrere Längshölzer und/oder Querhölzer umfassen. Ein Rahmen kann auf den Seiten, welche eine Längsausdehnung *l* aufweisen, eine gleiche oder eine unterschiedliche Anzahl an Längshölzern umfassen. Ein Rahmen kann auf den Seiten, welche eine Querausdehnung *b* aufweisen, eine gleiche oder eine unterschiedliche Anzahl an Querhölzern umfassen.

Ein Hohlraum kann mit Dämm- und/oder Füllmaterial, gefüllt sein oder füllbar sein.

Durch eine derartige Füllung eines Hohlraums mit Dämmmaterial können beispielsweise die Wärmeisolation und/oder Schallisolation verbessert werden. Als Dämmmaterial können beispielsweise Cellulosefasern, Holzfasern, Steinwollfasern oder Glaswolle eingesetzt werden.

Cellulosefasern bieten eine gute Wärmeisolation, können feuchtigkeitsregulierend wirken und können umweltfreundlich hergestellt werden. Holzfasern können nachhaltig produziert werden. Steinwollefasern sind nicht brennbar und sind Wärme- und Schallisolatoren. Glaswolle ist leichter als Steinwollfasern besitzt jedoch ein schlechteres akustisches Dämmvermögen.

Durch eine Füllung mit Füllmaterial kann zudem die Widerstandsfähigkeit gegenüber Feuer verbessert werden und die Dichte des mehrschichtigen Holzbauelements kann dem Verwendungszweck angepasst werden. Als Füllmaterial kann beispielsweise Kalksplitt verwendet werden.

In einer Ausführungsform können sämtliche Hohlräume dasselbe Dämm- und/oder Füllmaterial umfassen. Es ist auch denkbar, dass nicht alle Hohlräume dasselbe Dämm- und/oder Füllmaterial umfassen. Es ist zudem auch denkbar, dass das Dämm- und/oder Füllmaterial in einem Hohlraum gemischt vorhanden ist. In einer Ausführungsform können nur einzelne Hohlräume gefüllt sein oder die Hohlräume können nur teilweise mit Dämm- und/oder Füllmaterial gefüllt sein.

Die Aufgabe wird weiter durch ein Holzbauteil für einen Boden oder eine Decke oder eine Wand gelöst. Das Holzbauteil umfasst mindestens ein mehrschichtiges Holzbauelement. Ein derartiges Holzbauteil kann für Modulbauten wie Büros und Wohnhäuser eingesetzt werden. Insbesondere eignen sich derartige Holzbauteile für temporäre Gebäude.

Die Erfindung wird in den folgenden Figuren näher erläutert. Es zeigen:
- **FIG 1:**: Perspektivische Ansicht eines mehrschichtigen Holzbauelements mit einem Aussenschichtbereich,
- **FIG 2:**: Perspektivische Teilschnittansicht eines mehrschichtigen Holzbauelements mit zwei Aussenschichtbereichen,
- **FIG 3:**: Draufsicht auf eine Querinnenschicht,
- **FIG 4:**: Draufsicht auf eine Längsinnenschicht,
- **FIG 5:**: Perspektivische Ansicht eines Innenschichtbereichs für einen Einfeldträger,
- **FIG 6:**: Perspektivische Ansicht eines Innenschichtbereichs für einen Einfeldträger mit Kragarm,
- **FIG 7:**: Perspektivische Ansicht eines Innenschichtbereichs für einen Durchlaufträger,
- **FIG 8:**: Detailschnitt eines mehrschichtigen Holzbauelements mit zwei Aussenschichtbereichen,
- **FIG 9:**: Detailansicht eines mehrschichtigen Holzbauelements mit zwei Aussenschichtbereichen und Dämmung,
- **FIG 10:**: Detailansicht eines mehrschichtigen Holzbauelements mit zwei Aussenschichtbereichen und einer Füllung,
- **FIG 11:**: Detailansicht eines mehrschichtigen Holzbauelements mit einem Aussenschichtbereich,
- **FIG 12:**: Detailansicht eines mehrschichtigen Holzbauelements mit einem Aussenschichtbereich und Dämmung,
- **FIG 13:**: Detailansicht eines mehrschichtigen Holzbauelements mit einem Aussenschichtbereich und einer Füllung,
- **FIG 14:**: Explosionszeichnung eines mehrschichtigen Holzbauelements mit zwei Aussenschichtbereichen.

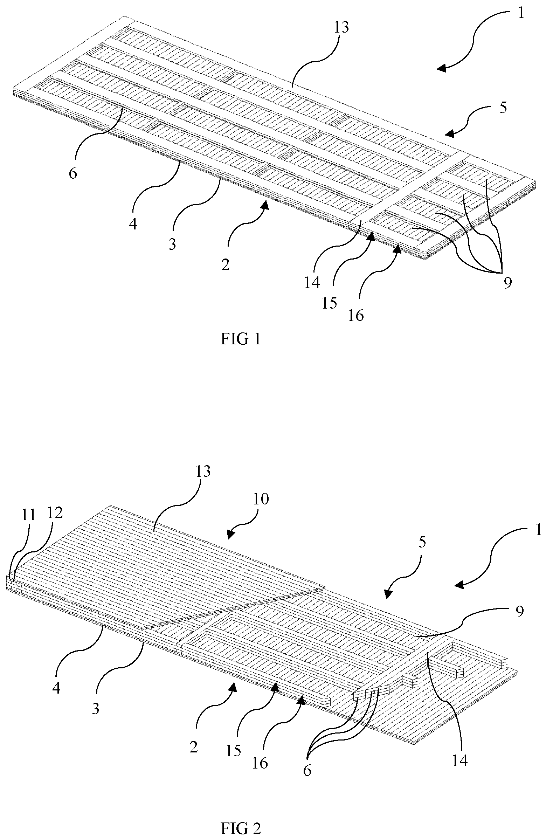

**Figur 1** zeigt eine perspektivische Ansicht eines mehrschichtigen Holzbauelements 1 mit einem ersten Aussenschichtbereich 2. Das mehrschichtige Holzbauelement 1 ist als Einfeldträger mit Kragarm ausgebildet und weist eine Längenausdehnung von 9.5 m und eine Querausdehnung von 3.2 m auf. Der erste Aussenschichtbereich 2 umfasst eine erste äussere Schicht 3. Die erste äussere Schicht 3 ist als durchgehende Fläche ausgebildet, welche ausschliesslich Längshölzer 13 umfasst. Die Längshölzer 13 sind schmalseitig mittels Polyurethankleber verklebt. Der erste Aussenschichtbereich 2 umfasst eine zweite äussere Schicht 4. Die zweite äussere Schicht 4 ist als durchgehende Fläche ausgebildet, welche ausschliesslich Querhölzer 14 umfasst. Die Querhölzer 14 sind schmalseitig mittels Polyurethankleber verklebt. Die erste 3 und die zweite 4 äussere Schicht sind vollflächig mittels Polyurethankleber miteinander verklebt. Sowohl die erste äussere Schicht 3 als auch die zweite äussere Schicht 4 weisen eine Einzelschichthöhe von 30 mm auf.

Das mehrschichtigen Holzbauelement 1 umfasst einen Innenschichtbereich 5 mit drei Innenschichten 6. Die der ersten äusseren Schicht 3 am weitesten entfernte Innenschicht 6 ist als Querinnenschicht 15 ausgebildet. Diese Querinnenschicht 15 umfasst drei Querhölzer 14, welche sich über die Querausdehnung des mehrschichtigen Holzbauelements 1 von 3.2 m durchgehend einstückig erstrecken.

Die Innenschichten 6 sind alternierend als Querinnenschicht 15 und Längsinnenschicht 16 übereinander angeordnet. Die Innenschichten 6 bilden 16 Hohlräume 9.

Die Innenschichten 6 sind jeweils mittels Polyurethankleber vollflächig miteinander verklebt. Die zweite äussere Schicht 4 ist mit dem Innenschichtbereich 5 verklebt.

**Figur 2** zeigt eine perspektivische Teilschnittansicht eines mehrschichtigen Holzbauelements 1 mit einem ersten Aussenschichtbereich 2 und einem zweiten Aussenschichtbereich 10. Durch die beiden Aussenschichtbereiche wird eine Hohlkastenform gebildet. Der zweite Aussenschichtbereich 10 ist nur als Teilschnitt dargestellt. Das mehrschichtige Holzbauelement 1 ist ebenfalls als Einfeldträger mit Kragarm ausgebildet und weist eine Längenausdehnung von 9.5 m und eine Querausdehnung von 3.2 m auf.

Der erste Aussenschichtbereich 2 umfasst eine erste äussere Schicht 3. Der zweite Aussenschichtbereich 10 umfasst eine erste äussere Schicht 11. Die erste äussere Schicht 3 des ersten Aussenschichtbereichs 2 und die erste äussere Schicht 11 des zweiten Aussenschichtbereichs 10 sind als durchgehende Flächen ausgebildet, welche ausschliesslich Längshölzer 13 umfassen. Die Längshölzer 13 sind jeweils schmalseitig mittels Polyurethankleber verklebt. Der erste Aussenschichtbereich 2 umfasst eine zweite äussere Schicht 4. Der zweite Aussenschichtbereich 10 umfasst eine zweite äussere Schicht 12. Die zweite äussere Schicht 4 des ersten Aussenschichtbereichs 2 und die zweite äussere Schicht 12 des zweiten Aussenschichtbereichs 10 sind als durchgehende Flächen ausgebildet, welche ausschliesslich Querhölzer 14 umfassen. Die Querhölzer 14 sind jeweils schmalseitig mittels Polyurethankleber verklebt. Die erste 3 und die zweite 4 äussere Schicht des ersten Aussenschichtbereichs 2 sind vollflächig mittels Polyurethankleber miteinander verklebt. Die erste 11 und die zweite 12 äussere Schicht des zweiten Aussenschichtbereichs sind vollflächig mittels Polyurethankleber miteinander verklebt.

Das mehrschichtige Holzbauelement 1 umfasst einen Innenschichtbereich 5 mit drei Innenschichten 6. Der Innenschichtbereich 5 ist nur als Teilschnitt dargestellt. Die der ersten äusseren Schicht 3 des ersten Aussenschichtbereichs 2 am weitesten entfernte Innenschicht 6 ist als Querinnenschicht 15 ausgebildet. Diese Querinnenschicht 15 umfasst acht Querhölzer 14 (sieben sind im Teilschnitt sichtbar), welche sich über die Querausdehnung des mehrschichtigen Holzbauelements 1 von 3.2 m durchgehend einstückig erstrecken. In Bereich der Auflagerpunkte sind jeweils drei Querhölzer 14 nebeneinander angeordnet. Die Innenschichten 6 sind alternierend als Querinnenschicht 15 und Längsinnenschicht 16 übereinander angeordnet. Die Innenschichten 6 bilden zwölf Hohlräume 9. Die Innenschichten 6 sind jeweils mittels Polyurethankleber vollflächig miteinander verklebt. Die zweite äussere Schicht 4 des ersten Aussenschichtbereichs 2 und die zweite äussere Schicht 12 des zweiten Aussenschichtbereichs 10 sind jeweils mit dem Innenschichtbereich 5 verklebt.

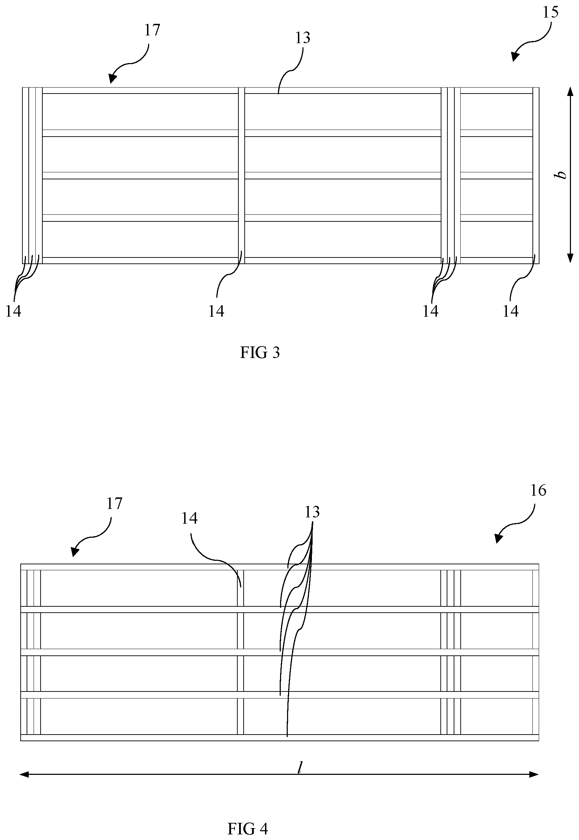

**Figur 3** zeigt eine Draufsicht auf eine Querinnenschicht 15. Die Querinnenschicht 15 ist Bestandteil eines Innenschichtbereichs 5 eines mehrschichtigen Holzbauelements 1 welches als Einfeldträger mit Kragarm ausgebildet ist (siehe Fig. 2). Die Querinnenschicht 15 umfasst acht Querhölzer 14, welche sich über die Querausdehnung b des mehrschichtigen Holzbauelements 1 von 3.2 m durchgehend einstückig erstrecken. In Bereich der Auflagerpunkte sind jeweils drei Querhölzer 14 nebeneinander angeordnet.

Die Querinnenschicht 15 umfasst 15 Längshölzer 13, wobei jeweils fünf Längshölzer 13 zwischen zwei Querhölzern 14 angeordnet sind. Die Querhölzer 14 bilden zusammen mit sechs Längshölzern 13 einen geschlossenen Rahmen 17.

**Figur 4** zeigt eine Draufsicht auf eine Längsinnenschicht 16. Die Längsinnenschicht 16 ist Bestandteil eines Innenschichtbereichs 5 eines mehrschichtigen Holzbauelements 1 welches als Einfeldträger mit Kragarm ausgebildet ist (siehe Fig. 2). Die Längsinnenschicht 16 umfasst fünf Längshölzer 13, welche sich über die Längsausdehnung *l* des mehrschichtigen Holzbauelements 1 von 9.5 m durchgehend einstückig erstrecken.

Die Längsinnenschicht 16 umfasst 32 Querhölzer 14, wobei jeweils acht Querhölzer 14 zwischen zwei Längshölzern 13 angeordnet sind. Die Längshölzer 13 bilden zusammen mit acht Querhölzern 14 einen geschlossenen Rahmen 17.

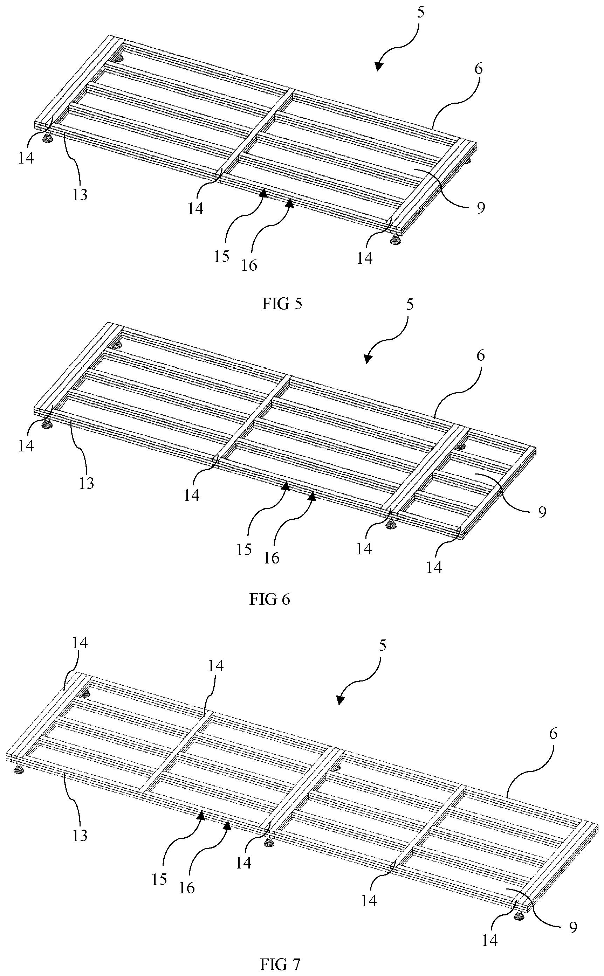

**Figur 5** zeigt eine Perspektivische Ansicht eines Innenschichtbereichs 5 eines mehrschichtigen Holzbauelements 1 (nicht dargestellt) welches als Einfeldträger ausgebildet ist. Der Einfeldträger liegt auf vier Auflagerpunkten auf.

Der Innenschichtbereich 5 umfasst drei Innenschichten 6, wobei zwei Innenschichten 6 als Querinnenschichten 15 und eine Innenschicht 6 als Längsinnenschicht 16 ausgebildet sind, welche alternierend übereinander angeordnet sind. Die Innenschichten 6 bilden acht Hohlräume 9. Die Querinnenschichten 15 umfassten jeweils sieben Querhölzer 14, welche sich über die Querausdehnung des mehrschichtigen Holzbauelements 1 von 3.2 m durchgehend einstückig erstrecken. In Bereich der Auflagerpunkte sind jeweils drei gleich breite Querhölzer 14 nebeneinander angeordnet. Die Längsinnenschichten 16 umfassen jeweils fünf Längshölzer 13, welche sich über die Längsausdehnung *l* des mehrschichtigen Holzbauelements 1 von 8 m durchgehend einstückig erstrecken.

Die Innenschichten 6 sind jeweils mittels Polyurethankleber vollflächig miteinander verklebt.

**Figur 6** zeigt eine Perspektivische Ansicht eines Innenschichtbereichs 5 eines mehrschichtigen Holzbauelements 1 (nicht dargestellt) welches als Einfeldträger mit Kragarm ausgebildet ist. Der Einfeldträger mit Kragarm liegt auf vier Auflagerpunkten auf.

Der Innenschichtbereich 5 umfasst drei Innenschichten 6, wobei zwei Innenschichten 6 als Querinnenschichten 15 und eine Innenschicht 6 als Längsinnenschicht 16 ausgebildet sind, welche alternierend übereinander angeordnet sind. Die Innenschichten 6 bilden zwölf Hohlräume 9. Die Querinnenschichten 15 umfassten jeweils acht Querhölzer 14, welche sich über die Querausdehnung des mehrschichtigen Holzbauelements 1 von 3.2 m durchgehend einstückig erstrecken. In Bereich der Auflagerpunkte sind jeweils drei Querhölzer 14 nebeneinander angeordnet. Die Längsinnenschichten 16 umfassen jeweils fünf Längshölzer 13, welche sich über die Längsausdehnung *l* des mehrschichtigen Holzbauelements 1 von 9.5 m durchgehend einstückig erstrecken. Der Kragarm umfasst dabei eine Längsausdehnung von 1.6 m. Die Innenschichten 6 sind jeweils mittels Polyurethankleber vollflächig miteinander verklebt.

**Figur 7** zeigt eine Perspektivische Ansicht eines Innenschichtbereichs 5 eines mehrschichtigen Holzbauelements 1 (nicht dargestellt) welches als Durchlaufträger ausgebildet ist. Der Durchlaufträger liegt auf sechs Auflagerpunkten auf.

Der Innenschichtbereich 5 umfasst drei Innenschichten 6, wobei zwei Innenschichten 6 als Querinnenschichten 15 und eine Innenschicht 6 als Längsinnenschicht 16 ausgebildet sind, welche alternierend übereinander angeordnet sind. Die Innenschichten 6 bilden 16 Hohlräume 9. Die Querinnenschichten 15 umfassten jeweils elf Querhölzer 14, welche sich über die Querausdehnung des mehrschichtigen Holzbauelements 1 von 3.2 m durchgehend einstückig erstrecken. In Bereich der Auflagerpunkte sind jeweils drei Querhölzer 14 nebeneinander angeordnet. Die Längsinnenschichten 16 umfassen jeweils fünf Längshölzer 13, welche sich über die Längsausdehnung *l* des mehrschichtigen Holzbauelements 1 von 12.0 m durchgehend einstückig erstrecken. Die Innenschichten 6 sind jeweils mittels Polyurethankleber vollflächig miteinander verklebt.

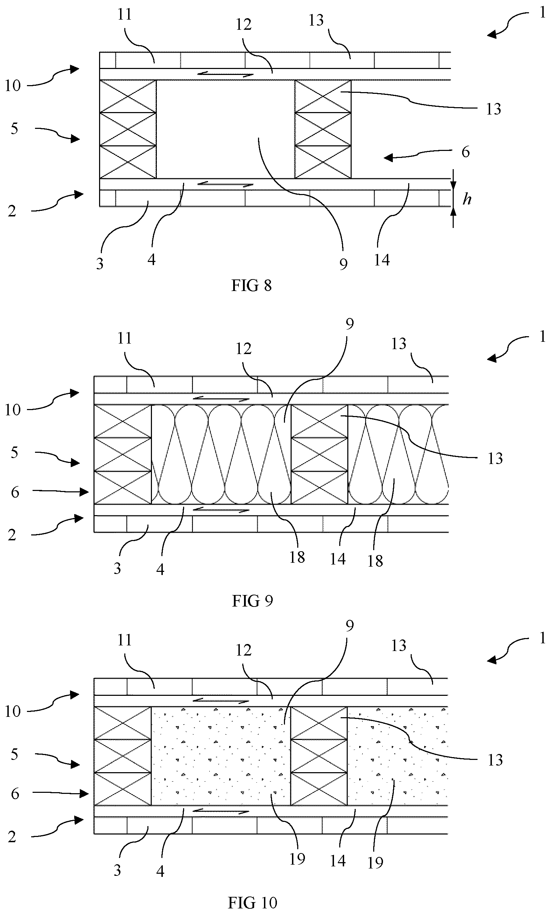

**Figur 8** zeigt einen Detailschnitt des in Figur 2 dargestellten mehrschichtigen Holzbauelements 1.

Die erste äussere Schicht 3 des ersten Aussenschichtbereichs 2 und die erste äussere Schicht 11 des zweiten Aussenschichtbereichs 10 weisen eine Einzelschichthöhe h von 30 mm auf. Die zweite äussere Schicht 4 des ersten Aussenschichtbereichs 2 und die zweite äussere Schicht 12 des zweiten Aussenschichtbereichs 10 weisen eine Einzelschichthöhe *h* von 30 mm auf.

**Figur 9** zeigt den in Figur 8 darstellten Detailschnitt des in Figur 2 dargestellten mehrschichtigen Holzbauelements 1. Die Ausführungsform in Figur 9 unterscheidet sich jedoch dadurch, dass die Hohlräume 9 mit Dämmmaterial 18 gefüllt sind. Das Dämmmaterial 18 umfasst Cellulosefasern.

**Figur 10** zeigt den in Figur 9 darstellten Detailschnitt eines mehrschichtigen Holzbauelements 1. Die Ausführungsform in Figur 10 unterscheidet sich jedoch dadurch, dass die Hohlräume 9 mit Füllmaterial 19 gefüllt sind. Das Füllmaterial 19 umfasst Kalksplitt.

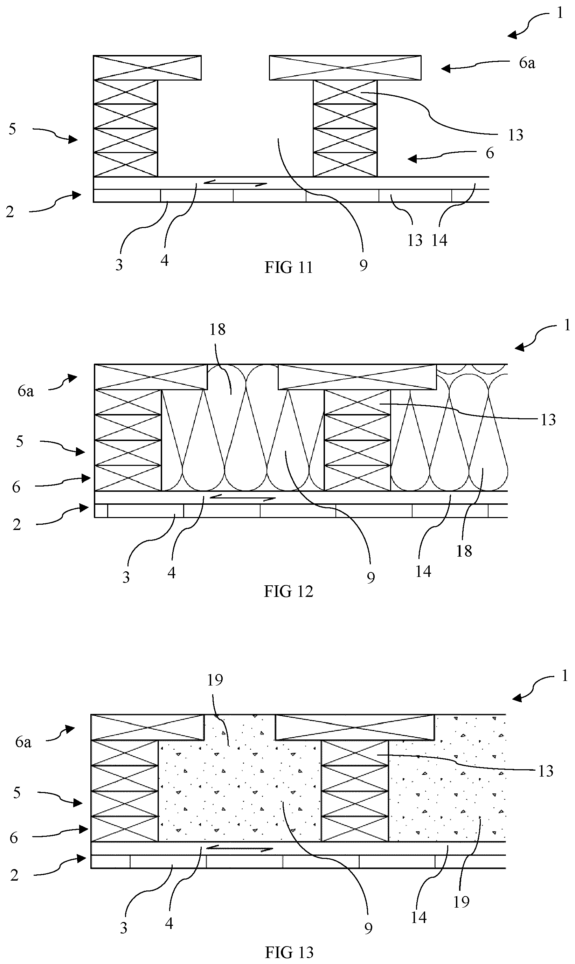

**Figur 11** zeigt einen Detailschnitt eines mehrschichtigen Holzbauelements 1 mit einem ersten Aussenschichtbereich 2. Der erste Aussenschichtbereich 2 umfasst eine erste äussere Schicht 3. Die erste äussere Schicht 3 ist als durchgehende Fläche ausgebildet, welche ausschliesslich Längshölzer 13 umfasst. Die Längshölzer 13 sind schmalseitig mittels Polyurethankleber verklebt. Der erste Aussenschichtbereich 2 umfasst eine zweite äussere Schicht 4. Die zweite äussere Schicht 4 ist als durchgehende Fläche ausgebildet, welche ausschliesslich Querhölzer 14 umfasst. Die Querhölzer 14 sind schmalseitig mittels Polyurethankleber verklebt. Die erste 3 und die zweite 4 äussere Schicht sind vollflächig mittels Polyurethankleber miteinander verklebt. Sowohl die erste äussere Schicht 3 als auch die zweite äussere Schicht 4 weisen eine Einzelschichthöhe von 20 mm auf.

Das mehrschichtigen Holzbauelement 1 umfasst einen Innenschichtbereich 5 mit fünf Innenschichten 6. Die der erste äussere Schicht 3 am weitesten entfernte Innenschichte 6a umfasst breitere Längshölzer 13 als die Längshölzer 13 der übrigen Innenschichten 6. Die Innenschichten 6 sind jeweils mittels Polyurethankleber vollflächig miteinander verklebt. Die zweite äussere Schicht 4 ist mit dem Innenschichtbereich 5 verklebt.

**Figur 12** zeigt den in Figur 11 darstellten Detailschnitt eines mehrschichtigen Holzbauelements 1. Die Ausführungsform in Figur 12 unterscheidet sich jedoch dadurch, dass die Hohlräume 9 mit Dämmmaterial 18 gefüllt sind. Das Dämmmaterial 18 umfasst Steinwollfasern.

**Figur 13** zeigt den in Figur 11 darstellten Detailschnitt eines mehrschichtigen Holzbauelements 1. Die Ausführungsform in Figur 13 unterscheidet sich jedoch dadurch, dass die Hohlräume 9 mit Füllmaterial 19 gefüllt sind. Das Füllmaterial 19 umfasst Kalksplitt.

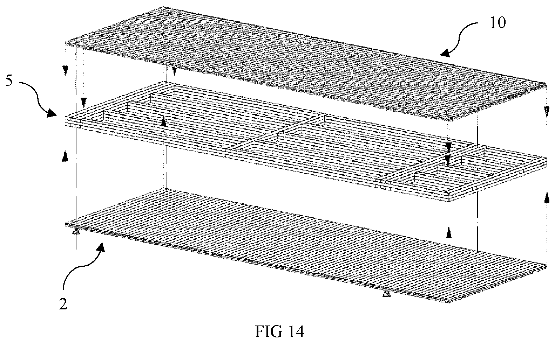

**Figur 14** zeigt eine Explosionszeichnung des in Figur 2 dargestellten mehrschichtigen Holzbauelements 1.

## Patentansprüche

1. Mehrschichtiges Holzbauelement (1) umfassend einen ersten Aussenschichtbereich (2), der eine erste äussere Schicht (3) und eine zweite äussere Schicht (4) umfasst, wobei die erste äussere Schicht (3) und die zweite äussere Schicht (4) über eine Fläche des mehrschichtigen Holzbauelements (1) jeweils durchgehend ausgebildet sind und jeweils miteinander verklebt sind, so dass das mehrschichtige Holzbauelement (1) eine Längenausdehnung *l* und eine Querausdehnung *b* umfasst,
**dadurch gekennzeichnet, dass** ein Innenschichtbereich (5) mit zumindest zwei Innenschichten (6) ausgebildet ist, der Innenschichtbereich (5) an den ersten Aussenschichtbereich (2) angrenzt, und die zumindest zwei Innenschichten (6) Längshölzer (13) und Querhölzer (14) umfassen, wobei in den zumindest zwei Innenschichten (6) zumindest ein Hohlraum (9) ausgebildet ist.

2. Mehrschichtiges Holzbauelement (1) nach Anspruch 1, **dadurch gekennzeichnet, dass** das mehrschichtige Holzbauelement (1) einen zweiten Aussenschichtbereich (10) umfasst, der dem ersten Aussenschichtbereich (2) gegenüberliegt, so dass der Innenschichtbereich (5) zwischen dem ersten Aussenschichtbereich (2) und dem zweiten Aussenschichtbereich (10) angeordnet ist, und der zweiten Aussenschichtbereich (10) eine erste äussere Schicht (11) und eine zweite äussere Schicht (12) umfasst, wobei die erste äussere Schicht (11) des zweiten Aussenschichtbereichs (10) und die zweite äussere Schicht (12) des zweiten Aussenschichtbereichs (10) über eine Fläche des mehrschichtigen Holzbauelements (1) jeweils durchgehend ausgebildet sind und jeweils miteinander verklebt sind.

3. Mehrschichtiges Holzbauelement (1) nach Anspruch 1 oder 2, **dadurch gekennzeichnet, dass** die erste äussere Schicht (3) des ersten Aussenschichtbereichs (2) Längshölzer (13) umfasst und die zweite äussere Schicht (4) des ersten Aussenschichtbereichs (2) Querhölzer (14) umfasst oder, dass die erste äussere Schicht (3) des ersten Aussenschichtbereichs (2) Querhölzer (14) umfasst und die zweite äussere Schicht (4) des ersten Aussenschichtbereichs (2) Längshölzer (13) umfasst.

4. Mehrschichtiges Holzbauelement (1) nach Anspruch 2 oder 3, **dadurch gekennzeichnet, dass** die erste äussere Schicht (11) des zweiten Aussenschichtbereich (10) Längshölzer (13) umfasst und die zweite äussere Schicht (12) des zweiten Aussenschichtbereich (10) Querhölzer (14) umfasst oder, dass die erste äussere Schicht (11) des zweiten Aussenschichtbereich (10) Querhölzer (14) umfasst und die zweite äussere Schicht (12) des zweiten Aussenschichtbereich (10) Längshölzer (13) umfasst.

5. Mehrschichtiges Holzbauelement (1) nach einem der vorhergehenden Ansprüche, **dadurch gekennzeichnet, dass** die erste äussere Schicht (3) des ersten Aussenschichtbereichs (2) und/oder die zweite äussere Schicht (4) des ersten Aussenschichtbereichs (2) und/oder die erste äussere Schicht (11) des zweiten Aussenschichtbereichs (10) und/oder die zweite äussere Schicht (12) des zweiten Aussenschichtbereichs (10) eine Einzelschichthöhe h von 20 mm bis 40 mm umfasst.

6. Mehrschichtiges Holzbauelement (1) nach einem der vorhergehenden Ansprüche, **dadurch gekennzeichnet, dass** die erste äussere Schicht (3) und die zweite äussere Schicht (4) des ersten Aussenschichtbereichs (2) und/oder die erste äussere Schicht (11) und die zweite äussere Schicht (12) des ersten Aussenschichtbereichs (10) eine Aussparung umfassen.

7. Mehrschichtiges Holzbauelement (1) nach einem der vorhergehenden Ansprüche, **dadurch gekennzeichnet, dass** zumindest eine Innenschicht (6), vorzugsweise sämtliche Innenschichten, eine Einzelschichthöhe h von 20 mm bis 60 mm umfasst

8. Mehrschichtiges Holzbauelement (1) nach einem der vorhergehenden Ansprüche, **dadurch gekennzeichnet, dass** Mehrschichtiges Holzbauelement (1) eine ungerade Anzahl an Innenschichten (6) umfasst.

9. Mehrschichtiges Holzbauelement (1) nach einem der vorhergehenden Ansprüche, **dadurch gekennzeichnet, dass** eine Innenschicht (6) eine Querinnenschicht (15) ist, welche Querhölzer (14) umfasst, welche sich über die Querausdehnung b des mehrschichtigen Holzbauelements (1) durchgehend, vorzugsweise einstückig erstrecken.

10. Mehrschichtiges Holzbauelement (1) nach einem der vorhergehenden Ansprüche, **dadurch gekennzeichnet, dass** eine Innenschicht (6) eine Längsinnenschicht (16) ist, welche Längshölzer (13) umfasst, welche sich über die Längsausdehnung *l* des mehrschichtigen Holzbauelements (1) durchgehend, vorzugsweise einstückig erstrecken.

11. Mehrschichtiges Holzbauelement (1) nach einem der vorhergehenden Ansprüche, **dadurch gekennzeichnet, dass** das mehrschichtige Holzbauelement (1) mehrere Innenschichten (6) umfasst, wobei Querinnenschichten (15) und Längsinnenschichten (16) alternierend, übereinander angeordnet sind.

12. Mehrschichtiges Holzbauelement (1) nach einem der vorhergehenden Ansprüche, **dadurch gekennzeichnet, dass** jede Innenschicht (6) zumindest zwei äussere Längshölzer (13) und zwei äussere Querhölzer (14) umfassen, welche einen Rahmen (17) bilden.

13. Mehrschichtiges Holzbauelement (1) nach einem der vorhergehenden Ansprüche, **dadurch gekennzeichnet, dass** mindestes ein Hohlraum (9) mit Dämm- (18) und/oder Füllmaterial (19), gefüllt oder füllbar ist.

14. Holzbauteil für einen Boden oder eine Decke oder eine Wand, umfassend mindestens ein mehrschichtiges Holzbauelement (1) gemäss einem der Ansprüche 1-10.
